Europäisches Patentamt

European Patent Office

Office européen des brevets

(11) Veröffentlichungsnummer : **0 118 655**
**B1**

# (12) EUROPÄISCHE PATENTSCHRIFT

(45) Veröffentlichungstag der Patentschrift :
02.03.88

(21) Anmeldenummer : 83890225.2

(22) Anmeldetag : 15.12.83

(51) Int. Cl.⁴ : **C 22 B  4/00**, C 01 B 31/32,
**F 27 B  1/08**

(54) **Verfahren zur Durchführung von metallurgischen oder chemischen Prozessen und Niederschachtofen.**

(30) Priorität : 22.12.82 AT 4638/82
28.10.83 AT 3833/83

(43) Veröffentlichungstag der Anmeldung :
19.09.84 Patentblatt 84/38

(45) Bekanntmachung des Hinweises auf die Patenterteilung : 02.03.88 Patentblatt 88/09

(84) Benannte Vertragsstaaten :
**BE DE FR GB IT LU NL SE**

(56) Entgegenhaltungen :
**AT-B-  257 964**
**DE-A- 1 433 351**
**DE-B- 2 110 274**
**DE-B- 2 737 720**
**DE-C- 1 252 336**
**US-A- 3 736 358**
**US-A- 3 834 895**

(73) Patentinhaber : **VOEST-ALPINE Aktiengesellschaft**
**Muldenstrasse 5**
**A-4020 Linz (AT)**

(72) Erfinder : **Lugscheider, Walter, Dipl.Ing. Dr.**
**Biesenfeldweg 2**
**A-4045 Linz (AT)**
Erfinder : **Riegler, Ernst**
**Grollerstrasse 5**
**A-4470 Enns (AT)**
Erfinder : **Zajicek, Ernst**
**Donaulände 10**
**A-4100 Ottensheim (AT)**

(74) Vertreter : **Wolfram, Gustav, Dipl.-Ing.**
**Schwindgasse 7 P.O. Box 205**
**A-1041 Wien (AT)**

## Beschreibung

Die Erfindung betrifft ein Verfahren zur Durchführung von metallurgischen oder chemischen Prozessen an Chargiergut in einem Schachtofen mittels eines Plasmabrenners.

Bei bekannten Verfahren dieser Art bzw. bei herkömmlichen Plasmaschmelzöfen besteht ganz allgemein das Problem, daß die von einer Plasmafackel abgegebene Energie nicht mit befriedigendem Wirkungsgrad auf das Chargiergut übertragen werden kann. Im Kern einer Plasmafackel herrschen bei Einsatz von zweiatomigen Plasmagasen Temperaturen um 15.000 °C, bei Einsatz einatomiger Plasmagase Temperaturen bis 30.000 °C, weswegen ein großer Teil der Energie durch Strahlung abgegeben wird. Ein beachtlicher Teil dieser Strahlung kann nicht für den Hochtemperaturprozeß bzw. Schmelzprozeß genutzt werden, was darüber hinaus auch zu einem erheblichen thermischen Verschleiß der Ofenauskleidung führt.

Es wurden bereits Versuche zur Verbesserung der Nutzung des Energieeintrages einer Plasmaentladung durch Vergrößerung des Entladungsquerschnittes unternommen. So ist aus der US-A-3 404 078 ein Verfahren zur Erzeugung eines Plasmabogens bekannt, wobei eine der Elektroden aus einem Fließbett elektrisch leitender Partikel besteht. In den Plasmabereich können verschiedene Materialien eingebracht werden ; die in der Hochtemperaturzone resultierenden Produkte gelangen in das Fließbett und werden dort abgekühlt. Das Verfahren nach der US-A ist somit nicht geeignet, Produkte in schmelzflüssiger Form zu erzielen.

Aus der DE-B-2 110 274 ist eine Vorrichtung zum Einschmelzen von Metallschwamm mittels eines in einer gekühlten Kokille vorgesehenen Plasmabrenners bekannt, wobei der Plasmabrenner zentral in der metallischen Kokille und einen Deckel derselben durchsetzend angeordnet ist. Der in vertikaler Richtung bewegbare Boden der Kokille bildet das Gegenpotential zum Plasmabrenner. Der Plasmabrenner ist von einem isolierten gekühlten Isoliermantel umgeben, der den beim Schmelzen absinkenden Metallschwamm vom Mantel des Plasmabrenners abhält und bewirkt, daß die Plasmaflamme in Richtung der Längsachse des Plasmabrenners zwischen diesem und dem Metallsumpf stabil brennt.

Die Erfindung bezweckt die Überwindung der dargelegten Schwierigkeiten und stellt sich die Aufgabe, ein sowohl für die Durchführung von metallurgischen Prozessen als auch von chemischen Hochtemperaturumsetzungen geeignetes Verfahren zu schaffen, bei dem ein rasches Einschmelzen und eine schnelle Reaktion zwischen den Chargiergutbestandteilen erreicht und bei dem der Fortgang des Verfahrens in verbesserter Weise gesteuert werden kann.

Diese Aufgabe wird erfindungsgemäß bei einem Verfahren der eingangs bezeichneten Art dadurch gelöst, daß das Chargiergut mittels einer zentrisch im Schachtofen vorgesehenen und zwischen einer die obere Abdeckung des Schachtofens durchsetzenden Elektrode und einer den Boden des Schachtofens durchsetzenden Gegenelektrode brennenden Plasmafackel eingeschmolzen und nach Bildung eines Sumpfes vom Boden des Schachtofens in flüssigem Zustand abgezogen wird, wobei konzentrisch um die Plasmafackel das Chargiergut eingebracht und ein die Plasmafackel radial umgebender Schutzwall aus festen Chargiergutbestandteilen an der Innenwand des Schachtofens aufgeschichtet wird und das Chargiergut von der Innenseite des Schutzwalles in den Bereich der Plasmafackel gelangt.

Die konzentrisch um den Fackelbereich eingebrachten Teilchen des Chargiergutes schützen die Innenwand, d. h. die feuerfeste Auskleidung des Schachtofens, gegen thermischen Verschleiß; ein besonderer Vorteil der erfindungsgemäßen Vorgangsweise besteht weiters darin, daß von dem zugeführten Chargiergut, welches den Fackelbereich nach Art eines Vorhanges umgibt, mehr Energie aufgenommen wird als bei konventionellen Verfahren, wodurch die Geschwindigkeit der metallurgischen bzw. chemischen Prozesse wesentlich beschleunigt wird.

Die Teilchen des vorhangförmig herabfallenden Chargiergutes bzw. das im unteren Bereich des Ofens konzentrisch um den Fackelbereich aufgeschichtete Chargiergut absorbieren die Wärmestrahlung größtenteils und werden dadurch vorgeheizt, so daß sich eine optimale Ausnützung der in Form von elektrischem Strom eingebrachten Energie ergibt.

Das erfindungsgemäße Verfahren kann mit Vorteil beispielsweise zur Herstellung von Ferrolegierungen, Calcium-Silizium, Roheisen, weiters zum Aufbauschmelzen von hochlegierten Stahlsorten sowie zum Umschmelzen von arteigenem Schrott herangezogen werden. Es ist jedoch auch zur Durchführung von bei hohen Temperaturen ablaufenden chemischen Prozessen, wie der Herstellung von Calciumcarbid, hervorragend geeignet.

Das erfindungsgemäße Verfahren zeichnet sich infolge des sehr geringen Metallabbrandes bei den beschleunigt ablaufenden metallurgischen Prozessen in der sich aufbauenden Inertgas- oder reduzierenden Atmosphäre außerdem durch einen im Vergleich zu herkömmlichen Schmelzverfahren, wie Lichtbogenschmelzen, hohen Ausbringungsgrad an Legierungselementen aus.

Zur Herstellung von Calciumcarbid wird nach der bekannten Technik ein Möllergemisch aus CaO bzw. $CaCO_3$ und Kohle geschmolzen und unter Freisetzung von CO reduziert, wobei die elektrische Energie über Graphit- oder Söderbergelektroden mit großem Durchmesser zugeführt wird. Hiebei bildet sich kein Lichtbogen aus, sondern die Erwärmung erfolgt im wesentlichen durch Widerstandserhitzung des Möllers. Dementsprechend sind die erreichbaren Temperaturen im Einschmelzbereich relativ niedrig und der Zeitaufwand für das Einschmelzen entsprechend hoch.

In der bereits erwähnten US-PS 3 404 078 wird zur Herstellung von $CaC_2$ vorgeschlagen, ein Fließbett aus Graphitteilchen unter Verwendung von Argon als Trägergas vorzusehen und in die zwischen diesem Fließbett und der negativen Elektrode erzeugte Plasmaentladung CaO mit Argon einzublasen. Es werden Graphitteilchen mit $CaC_2$-Überzug erhalten, wobei eine lediglich 24,6 %ige Umwandlung erzielt wird.

Nach einer bevorzugten Ausführungsform kann zu Beginn des metallurgischen oder chemischen Prozesses eine geringe Menge des Chargiergutes in den Bereich der Gegenelektrode eingebracht und nach Zündung der Plasmafackel weiteres Chargiergut kontinuierlich eingebracht werden. In zu hoher Schicht würde das noch feste Chargiergut die Ausbildung der Plasmafackel behindern, es weist jedoch ausreichende elektrische Leitfähigkeit auf, um in geringer Menge die Zündung der Plasmafackel zu ermöglichen.

Zweckmäßig wird das Chargiergut durch einen Kranz von die Elektrode umgebenden Chargierrohren oder durch einen die Elektrode umgebenden ringförmigen Chargierschlitz kontinuierlich eingebracht. Es können beispielsweise 6 bis 12 Chargierrohre vorgesehen sein.

Wird das Chargiergut durch einen die Elektrode umgebenden ringförmigen Chargierschlitz eingebracht, resultiert ein besonders dichter und gleichmäßiger Vorhang von Chargiergutteilchen.

Vorzugsweise wird Chargiergut mit einer Korngröße bis 25 mm eingesetzt. Bei stückigem Gut sind Korngrößen bis 10 mm und bei Einsatz von Pellets solche von 5 bis 15 mm besonders bevorzugt. Als Plasmagase kommen alle Gase, welche für diesen Zweck üblicherweise verwendet werden, wie Ar, He, $H_2$, $N_2$ und CO in Frage.

Neben der Zuführung des Chargiergutes durch die Chargieröffnungen können feinteilige Bestandteile des Chargiergutes auch durch Innenkanäle der Elektrode zugeführt werden.

Zur Herstellung von Ferrolegierungen aus oxidischen Erzen und kohlenstoffhältigem Material wird als Chargiergut ein Gemisch aus den entsprechenden Erzen, worin die Legierungselemente und das Eisen vorwiegend in oxidischer Form vorliegen, sowie aus Kohle bzw. Koks eingesetzt.

Zur Herstellung von Calciumcarbid durch Reduzieren von CaO bzw. $CaCO_3$ mit kohlenstoffhältigem Material unter Freisetzung von CO und Schmelzen wird als Chargiergut ein Möllergemisch aus CaO bzw. $CaCO_3$ und Kohle bzw. Koks eingesetzt.

Mittels der Plasmafackel können auch bei diesen reduktiven Prozessen Einsatzstoffe mit verschiedenen Korngrößen, sogar staubförmige Einsatzstoffe, störungsfrei geschmolzen und zur Reaktion gebracht werden, während bisher — insbesondere bei der eingangs dargelegten Herstellung von $CaC_2$ durch Widerstandserhitzung — nur grobstückige Einsatzstoffe verwendet werden konnten.

Beim erfindungsgemäßen Verfahren wird nicht nur die Strahlungshitze der Plasmafackel, sondern auch die Konvektionshitze im Auftreffffleck der Fackel auf dem noch festen oder bereits geschmolzenen Chargiergut nutzbar gemacht und mit der infolge des Stromflusses durch das restliche Chargiergut bzw. den restlichen Möller resultierenden Widerstandserhitzung kombiniert. Das bei der Reaktion entstehende Kohlenmonoxid erhöht die Energiedichte der Plasmafackel und bewirkt damit eine weitere Erhöhung der Energieausbeute.

Die Erfindung umfaßt weiters einen Niederschachtofen zur Durchführung des erfindungsgemäßen Verfahrens — insbesondere zur Durchführung reduktiver Prozesse, wie die Herstellung von Ferrolegierungen und Calciumcarbid. Der Ofen weist einen feuerfest ausgekleideten Ofenkörper und eine in den Ofenkörper eingesetzte Führung für die Plasmabrennereinrichtung auf, wobei zwischen der Führung und der feuerfesten Auskleidung ein ringförmiger Raum zur Zuführung des Chargiergutes bzw. Möllers vorgesehen ist. Erfindungsgemäß ist vorgesehen, daß auf den Ofenkörper eine obere Abdeckung gasdicht aufsetzbar ist, welche eine nach innen ragende Säule aus feuerfestem Material aufweist, daß die Säule eine zentrale Bohrung zur Durchführung einer Elektrode und eine Wasserkühlung aufweist und im Boden des Schachtofens eine Gegenelektrode vorgesehen ist, wobei zur Ausbildung der Plasmafackel ein kegelstumpfförmiger Raum zwischen der Mündung der Elektrode (des Plasmabrenners), der Bodenelektrode und der Innenseite des Schutzwalles aus festen Chargiergutbestandteilen ausgespart ist.

Vorteilhaft sind die Wände des das Chargiergut aufnehmenden Schachtes gegen den Boden hin divergierend ausgebildet.

Die durch die zentrale Bohrung der Säule aus feuerfestem Material geführte Elektrode der Plasmabrennereinrichtung weist nach einer vorteilhaften Ausführungsform Innenkanäle zur Zuführung von feinteiligen Chargiergutbestandteilen, insbesondere Kohle, auf.

Die Erfindung wird durch die Zeichnung sowie die Beispiele näher erläutert. Fig. 1 zeigt einen Vertikalschnitt durch einen Niederschachtofen und Fig. 2 eine Draufsicht von oben. Fig. 3 zeigt eine Draufsicht auf den Ofen mit einer anderen Ausbildung der Chargieröffnung. In Fig. 4 ist eine abgeänderte Ausführungsform eines Niederschachtofens, welche sich insbesondere zur Durchführung der erwähnten reduktiven Prozesse eignet, dargestellt.

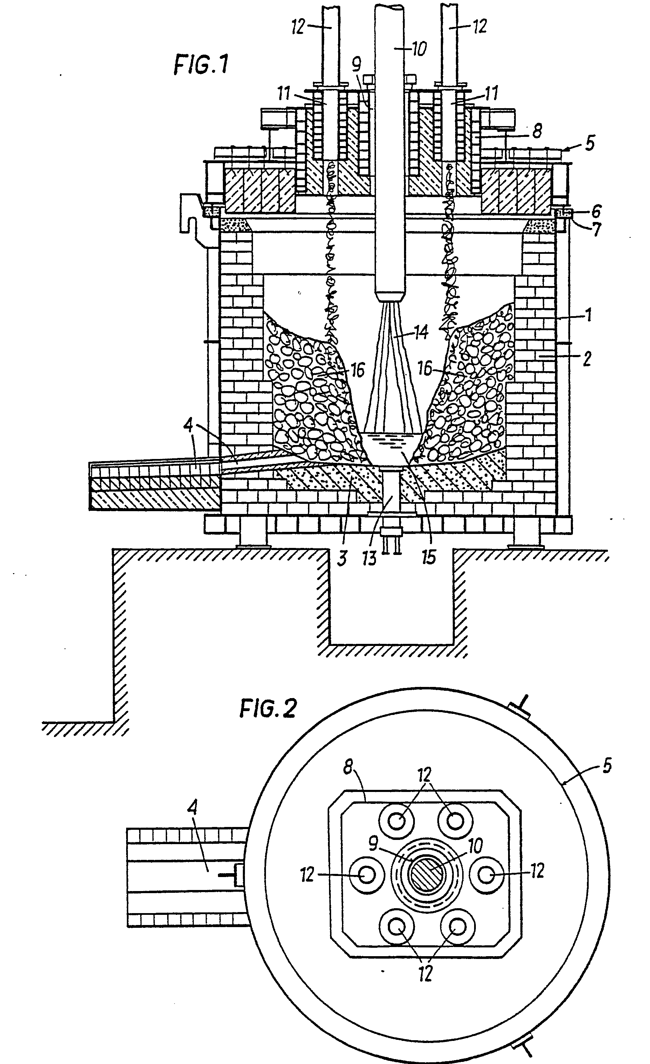

In Fig. 1 ist mit 1 der Mantel des Schachtofens bezeichnet, der eine Auskleidung aus feuerfesten Ziegeln 2 aufweist. Der Boden des Schachtofens ist aus Graphitmasse 3 gestampft und im Boden ist eine seitliche Ausgießrinne 4 vorgesehen. Auf dem Schachtofen ruht eine obere Abdeckung 5, welche den Ofeninnenraum mittels eines Deckelschwertes 6, welches in eine rundum laufende Sandtasse 7 eingreift, gasdicht abschließt. Das mit einer Wasserkühlung versehene Herzstück 8 der Abdeckung weist eine Anzahl von Bohrungen auf, u. zw. eine zentrische wassergekühlte Bohrung 9, durch die der Plasmabrenner bzw. die Elektrode 10 geführt ist, und einen Kranz von sechs die zentrale Bohrung umgebenden weiteren Bohrungen 11, durch die Chargierrohre 12 zum Einbringen des Chargiergutes bzw. der Möllerbestandteile geführt sind. Im Boden des Schachtofens, gegenüber der Mündung des Plasmabrenners 10, ist die Gegenelektrode 13 angeordnet.

Zu Beginn des Prozesses wird eine geringe Menge von Chargiergut durch die Chargierrohre 12 eingebracht ; dann wird die Entladung gezündet, wobei sich eine frei brennende Plasmafackel 14 bildet, und es wird ein Sumpf 15 aus geschmolzenem Chargiergut erzeugt, womit der Prozeß eingeleitet wird. Dann wird weiteres Chargiergut kontinuierlich eingebracht, wobei um den Sumpf 15 ein Schutzwall 16 aus festen Chargiergutbestandteilen an der Innenwand 2 des Ofens aufgeschichtet wird, welcher Schutzwall 16 die feuerfeste Auskleidung vor zu hohen Temperaturen schützt und welcher gleichzeitig durch die Strahlungshitze der Plasmafackel 14 vorerhitzt wird.

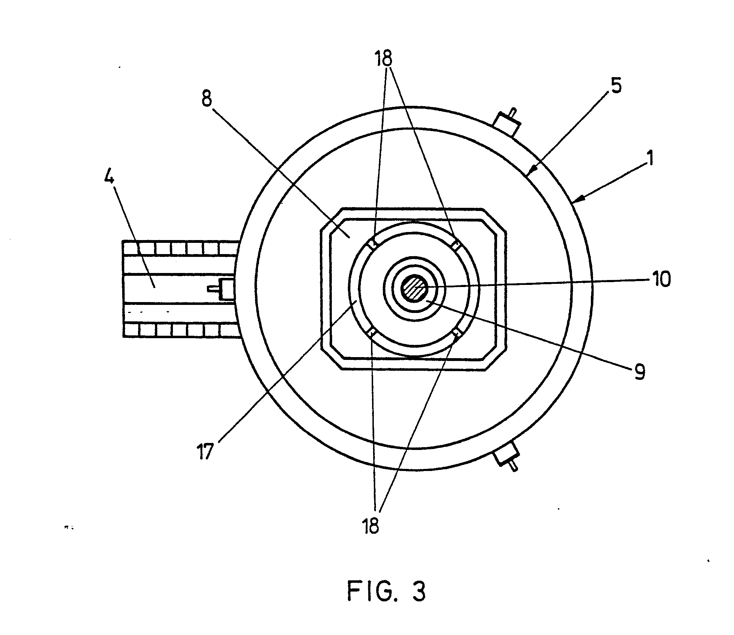

In Fig. 3 ist der Ofenmantel wieder mit 1 bezeichnet, auf den Ofenkörper ist eine obere Abdeckung 5 gasdicht aufgesetzt. Weiters ist die seitlich vom Bodenteil des Ofens wegführende Ausgießrinne 4 sichtbar. Im wassergekühlten Herzstück 8 der Abdeckung 5 ist eine zentrale Bohrung 9 vorgesehen, durch welch letztere ein Plasmabrenner 10 geführt ist. Ein ringförmiger Chargierschlitz 17 umgibt konzentrisch die Bohrung 9. Im Chargierschlitz 17 sind vier Distanzstücke 18 vorgesehen, welche auch Kanäle für das Kühlwasser enthalten.

Wird das Chargiergut durch den Schlitz 17 kontinuierlich in den Schachtofen eingebracht, bilden die Teilchen des Chargiergutes einen dichten Vorhang um den Bereich der Plasmafackel, welche zwischen der Elektrode im Brenner 10 und der den Boden des Schachtofens durchsetzenden Gegenelektrode 13 brennt. Der Teilchenvorhang schützt die Ofenausmauerung vor thermischer Belastung und absorbiert den größten Teil der von der Plasmafackel abgestrahlten Wärmeenergie, so daß eine beachtliche Menge des Chargiergutes den Boden des Schachtofens bzw. den Schmelzensumpf bereits in flüssigem Zustand erreicht. Die größeren, noch nicht aufgeschmolzenen Teilchen des Chargiergutes tragen zur Aufschichtung des Schutzwalles 16 bei.

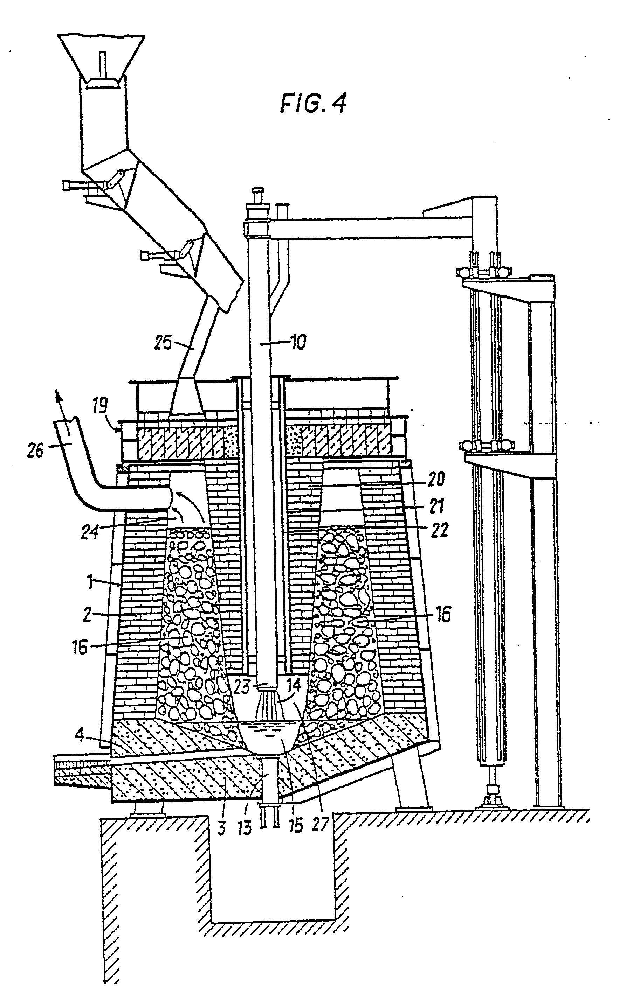

Auch bei der Ausführungsform nach Fig. 4 ist der Mantel des Gefäßes wieder mit 1 und die feuerfeste Auskleidung mit 2 bezeichnet. Der Boden des Ofens ist von Graphitstampfmasse 3 gebildet, welcher Boden eine seitliche Ablaufrinne bzw. Ausgießrinne 4 für geschmolzenes Material aufweist. Auf die Mündung des Schachtofens, der oben einen geringeren Durchmesser hat als unten, d. h. daß die Ofenwände zum Boden hin divergieren, ist eine wassergekühlte obere Abdeckung 19 aufgesetzt, welche Abdeckung zum Ofeninneren hin eine säulenförmige Führung 20 aufweist, die aus feuerfestem Material besteht. Die kegelstumpfförmige Säule besitzt eine zentrale Bohrung 21, die eine Wasserkühlung 22 aufweist. Durch die Bohrung ist der Plasmabrenner 10 geführt, der mit seiner Mündung 23 das untere Ende der Säule 20 überragt. Durch die kegelstumpfförmige Ausbildung der Führungssäule und die konische Gestaltung der feuerfesten Auskleidung 2 der Innenwände des Schachtofens wird ein ringförmiger, nach unten divergierender Raum 24 gebildet, in dem feste Chargiergut- bzw. Möllerbestandteile mit der Funktion eines Schutzwalles 16 lagern, die durch die den Deckel 19 durchsetzende, Dosierklappen aufweisende Zubringschurre 25 eingebracht werden. Mit 26 ist ein Abzugsrohr für das bei einem Reduktionsprozeß frei werdende Gas bezeichnet.

Zwischen der Bodenelektrode 13 und der Mündung 23 des Plasmabrenners bzw. der Elektrode 10 bleibt — wie ersichtlich — ein kegelstumpfförmiger, nach unten konvergierender Raum 27 frei. In diesem Raum wird die Plasmafackel 14 zu Beginn des Prozesses, nachdem eine geringe Menge Chargiergut bzw. Möller eingeführt wurde gezündet ; sodann wird durch weitere Möllerzugabe der ringförmige Raum 24 bis knapp unterhalb des Abzugsrohres 26 mit Möllerbestandteilen gefüllt.

Bei Fortsetzung des Reduktionsprozesses werden in dem ausgesparten Raum 27 kontinuierlich Möllerbestandteile abgeschmolzen und umgesetzt ; das entstehende Gas, insbesondere CO, steigt durch die Möllerschicht bzw. den Schutzwall 16 auf und bewirkt eine Vorerhitzung und Vorreduzierung.

Nach einer bevorzugten Ausführungsform zur Herstellung von Ferrolegierungen oder Calciumcarbid kann während des Verfahrens feinteilige Kohle zusätzlich durch einen oder mehrere Innenkanäle des Plasmabrenners in den Raum 27 eingebracht werden, wobei zusätzlich CO entsteht.

Außer den beschriebenen Ausführungsformen können — wie dem Fachmann verständlich ist — Schachtöfen mit einer Mehrzahl von Plasmabrennern, mit welchen jeweils eine Plasmafackel erzeugt wird, verwendet werden.

Beispiel 1 : Herstellung von Ferromangan :

1 300 kg Ferromanganerze (mit 45 bis 55 % Mn, bis 10 % Fe, wobei Mn und Fe vorwiegend in Form von Oxiden vorliegen) werden — vermischt mit 400 bis 500 kg Kohle, Koks oder Kohlegrus — kontinuierlich mit einer Geschwindigkeit von etwa 1,5-3 kg/s chargiert. Etwa 1 t Ferromangan mit 75 % Mn, 2 % Oxiden, Rest Eisen, wird nach etwa 10 bis 20 min ausgebracht.

Bei den folgenden Beispielen 2 und 3 werden 1 bis 5 kg, vorzugsweise 3 kg Chargiergut pro s kontinuierlich eingebracht ; die Ausbringung beträgt 3 bis 15 t pro h.

Bei einem Schachtofen ist die Ofengröße durch die höchstmögliche Leistung des Brenners begrenzt ; ein solcher Ofen mit üblichem Brenner ermöglicht eine Ausbringung von etwa 5 t Produkt/h.

Beispiel 2 : Erschmelzen von CrNiMoNb-Stahl aus arteigenem Schrott :

5 000 kg Shredder-Schrott folgender Zusammensetzung : 0,049 % C, 0,21 % Si, 1,26 % Mn, 0,017 % P, 0,031 % S, 18,8 % Cr, 11,03 % Ni, 2,2 % Mo, 0,11 % Cu, 0,60 % Nb ; werden zusammen mit 32,6 kg FeMo (59,7 % Mo), 21,7 kg Rein-Ni (99,0 %), 83,3 kg FeCr (0,033 % C, 73,1 % Cr) und 16,3 kg FeNbTa (60,7 % Nb) chargiert.

Insgesamt werden 5 072 kg Stahl der Zusammensetzung : 0,055 % C, 0,32 % Si, 1,22 % Mn, 0,023 % P, 0,011 % S, 19,22 % Cr, 11,15 % Ni, 2,5 % Mo, 0,11 % Cu, 0,75 % Nb erhalten. Bei einem Gesamtmetallabbrand von 2 % ergibt dies folgenden Ausbringungsgrad an den jeweiligen Legierungselementen :
99 % Ni, 97 % Cr, 98 % Mo, 98 % Mn, 96 % Nb.

Beispiel 3 : Herstellung von Stahl des Typs X5CrNiMoNb 19 11 durch Aufbauschmelzen :

5 000 kg Eisenschwamm, 934 kg Rein-Ni, 350 kg FeMo (56 % Mo), 2 205 kg FeCr (0,036 % C, 73,8 % Cr), 108 kg Mn-Metall (99 %) und 87 kg FeNbTa (60,7 % Nb) werden in den Ofen chargiert.

Die Ausbringung beträgt 8 458 kg Stahl der Zusammensetzung : 0,041 % C, 0,35 % Si, 1,27 % Mn, 0,016 % P, 0,01 % S, 18,57 % Cr, 10,95 % Ni, 2,29 % Mo, 0,11 % Cu, 0,63 % Nb.

Der Gesamtmetallabbrand liegt bei 3 %, der Ausbringungsgrad an den jeweiligen Legierungselementen beträgt daher : 99 % Ni, 99 % Cr, 99 % Mo, 99 % Mn, 100 % Nb.

Beispiel 4 : Herstellung von Calciumcarbid :

Ein Möllergemisch aus 3 000 kg gebranntem Kalk und 1 950 kg Kohle mit diskontinuierlicher Korngrößenverteilung bis maximal 25 mm wurde kontinuierlich in einen Schachtofen der in Fig. 4 gezeigten Ausführungsform mit einer Chargiergeschwindigkeit von 3 kg/s eingebracht, nachdem zunächst eine geringe Menge Möller im Bereich der den Boden des Schachtofens durchsetzenden Gegenelektrode vorgelegt und die Plasmafackel gezündet wurde. Als Plasmagas wurde Argon eingesetzt. Das ausgebrachte Calciumcarbid wies einen Reinheitsgrad von 90,2 % auf.

Es konnte festgestellt werden, daß die Ausnutzung der aufgewendeten elektrischen Energie beim erfindungsgemäßen Verfahren ganz allgemein um etwa 20 % besser als bei bekannten Schmelz- bzw. Reduktionsverfahren ist.

**Patentansprüche**

1. Verfahren zur Durchführung von metallurgischen oder chemischen Prozessen an Chargiergut in einem feuerfest ausgekleideten Schachtofen mittels eines Plasmabrenners, bei dem das Chargiergut mittels einer zentrisch im Schachtofen vorgesehenen und zwischen einer die obere Abdeckung (5, 19) des Schachtofens durchsetzenden Elektrode (10) und einer den Boden des Schachtofens durchsetzenden Gegenelektrode (13) brennenden Plasmafackel (14) eingeschmolzen und nach Bildung eines Sumpfes (15) vom Boden des Schachtofens in flüssigem Zustand abgezogen wird, wobei konzentrisch um die Plasmafackel (14) das Chargiergut eingebracht und ein die Plasmafackel (14) radial umgebender Schutzwall (16) aus festen Chargiergutbestandteilen an der Innenwand des Schachtofens aufgeschichtet wird und das Chargiergut von der Innenseite des Schutzwalles (16) in den Bereich der Plasmafackel (14) gelangt.

2. Verfahren nach Anspruch 1, dadurch gekennzeichnet, daß zu Beginn des metallurgischen oder chemischen Prozesses eine geringe Menge des Chargiergutes in den Bereich der Gegenelektrode (13) eingebracht und nach Zündung der Plasmafackel (14) weiteres Chargiergut kontinuierlich eingebracht wird.

3. Verfahren nach einem der Ansprüche 1 und 2, dadurch gekennzeichnet, daß das Chargiergut kontinuierlich durch einen Kranz von die Elektrode (10) umgebenden Chargierrohren (12) eingebracht wird.

4. Verfahren nach einem der Ansprüche 1 und 2, dadurch gekennzeichnet, daß das Chargiergut kontinuierlich durch einen die Elektrode (10) umgebenden ringförmigen Chargierschlitz (17) eingebracht wird.

5. Verfahren nach einem oder mehreren der Ansprüche 1 bis 4, dadurch gekennzeichnet, daß Chargiergut mit einer Korngröße bis 25 mm eingesetzt wird.

6. Verfahren nach einem oder mehreren der Ansprüche 1 bis 5, dadurch gekennzeichnet, daß feinteilige Bestandteile des Chargiergutes durch Innenkanäle der Elektrode (10) zugeführt werden.

7. Verfahren nach einem oder mehreren der Ansprüche 1 bis 6 zur Herstellung von Ferrolegierungen aus oxidischen Erzen und kohlenstoffhältigem Material, dadurch gekennzeichnet, daß als Chargiergut ein Gemisch aus den entsprechenden Erzen, worin die Legierungselemente und das Eisen vorwiegend in oxidischer Form vorliegen, sowie aus Kohle bzw. Koks eingesetzt wird.

8. Verfahren nach einem oder mehreren der Ansprüche 1 bis 6 zur Herstellung von Calciumcarbid durch Reduzieren von CaO bzw. $CaCO_3$ mit kohlenstoffhältigem Material unter Freisetzung von CO und Schmelzen, dadurch gekennzeichnet, daß als Chargiergut ein Möllergemisch aus CaO bzw. $CaCO_3$ und Kohle bzw. Koks eingesetzt wird.

9. Niederschachtofen zur Durchführung des Verfahrens nach einem der Ansprüche 7 und 8 mit einem feuerfest ausgekleideten Ofenkörper und einer in den Ofenkörper eingesetzten Führung (20) für die Plasmabrennereinrichtung, wobei zwischen der Führung (20) und der feuerfesten Auskleidung (2) ein ringförmiger Raum (24) zur Zuführung des Chargiergutes bzw. Möllers vorgesehen ist, dadurch gekennzeichnet, daß auf den Ofenkörper eine obere Abdeckung (19) gasdicht aufsetzbar ist, welche eine nach innen ragende Säule (20) aus feuerfestem Material aufweist, daß die Säule eine zentrale Bohrung (21) zur Durchführung einer Elektrode (10) und eine Wasserkühlung (22) aufweist und im Boden (3) des Schachtofens eine Gegenelektrode (13) vorgesehen ist, wobei zur Ausbildung der Plasmafackel (14) ein kegelstumpfförmiger Raum (27) zwischen der Mündung (23) der Elektrode bzw. des Plasmabrenners (10), der Gegenelektrode (13) und der Innenseite des Schutzwalles (16) aus festen Chargiergutbestandteilen ausgespart ist.

10. Niederschachtofen nach Anspruch 9, dadurch gekennzeichnet, daß die von der feuerfesten Auskleidung (2) und von der Säule (20) gebildeten Wände des das Chargiergut aufnehmenden ringförmigen Raumes bzw. Schachtes (24) zum Boden (3) des Ofens hin divergierend ausgebildet sind.

11. Niederschachtofen nach Anspruch 9, dadurch gekennzeichnet, daß die Elektrode (10) Innenkanäle zur Zuführung von feinteiligen Chargiergutbestandteilen, insbesondere Kohle, aufweist.

## Claims

1. A method for carrying out metallurgical or chemical processes with charging stock in a refractory-lined shaft furnace by means of a plasma burner, wherein the charging stock is melted by means of a plasma torch (14) centrically arranged in the shaft furnace and burning between an electrode (10) penetrating the upper cover (5, 19) of the shaft furnace and a counter electrode (13) penetrating the bottom of the shaft furnace, and, upon formation of a sump (15), is drawn off from the bottom of the shaft furnace in a liquid state, with the charging stock being introduced concentrically about the torch (14) and a protective wall (16) of solid charging stock components being piled up at the inner wall of the shaft furnace and the charging stock getting into the region of the plasma torch (14) from the inner side of the protective wall (16).

2. A method according to claim 1, characterised in that, at the beginning of the metallurgical or chemical process a slight amount of the charging stock is introduced into the region of the counter electrode (13) and, after ignition of the plasma torch (14), further charging stock is continuously supplied.

3. A method according to any one of claims 1 and 2, characterised in that the charging stock is continuously introduced through a ring of charging pipes (12) surrounding the electrode (10).

4. A method according to any one of claims 1 and 2, characterised in that the charging stock is continuously introduced through an annular charging slot (17) surrounding the electrode (10).

5. A method according to one or more of claims 1 to 4, characterised in that charging stock having a grain size of up to 25 mm is used.

6. A method according to one or more of claims 1 to 5, characterised in that fine-particle components of the charging stock are supplied through inner channels of the electrode (10).

7. A method according to one or more of claims 1 to 6 for producing ferro-alloys from oxidic ores and carbonaceous material, characterised in that a mixture of the respective ores in which the alloying elements and the iron mainly are present in oxidic form as well as of coal or coke is used as the charging stock.

8. A method according to one or more of claims 1 to 6 for producing calcium carbide by reducing CaO or $CaCO_3$ with carbonaceous material under release of CO and by melting, characterised in that a burden mixture of CaO or $CaCO_3$, respectively, and coal or coke is used as the charging stock.

9. A low shaft furnace for carrying out the method according to one of claims 7 and 8 with a refractory-lined furnace body and a guide (20) for the plasma burner means inserted in the furnace body, an annular space (24) for supplying the charging stock or burden being provided between the guide (20) and the refractory lining (2), characterised in that an upper cover (19) is placeable onto the furnace body in a gas-tight manner, which cover has an inwardly projecting column (20) of refractory material, that the column is provided with a central bore (21) for an electrode (10) to be guided therethrough and with a water-cooling, and that a counter electrode (13) is provided in the bottom (3) of the shaft furnace, wherein, for forming the plasma torch (14), a frustoconical space (27) is left free between the mouth (23) of the electrode or plasma burner (10), the counter electrode (13) and the inner side of the protective wall (16) of solid charging stock components.

10. A low-shaft furnace according to claim 9, characterised in that the walls of the annular space or shaft (24) accommodating the charging stock, which walls are formed by the refractory lining (2) and by the column (20), are designed so as to diverge towards the bottom (3) of the furnace.

11. A low-shaft furnace according to claim 9, characterised in that the electrode (10) comprises inner channels for supplying fine-particle charging stock components, in particular coal.

## Revendications

1. Procédé pour la mise en œuvre de processus métallurgiques ou chimiques sur un matériau chargé dans un bas fourneau à garnissage réfractaire au moyen d'un chalumeau à plasma, dans lequel le matériau chargé est fondu au moyen d'une torche à plasma (14) prévue au centre du four a cuve et brûlant entre une électrode (10) traversant le couvercle (5, 19) du four à cuve et une contre-électrode (13) traversant le fond du four à cuve et il est retiré à l'état liquide du fond du four a cuve après formation d'un cratère de liquide (15), le matériau chargé étant introduit concentriquement autour de la torche à plasma (14) et un remblai protecteur (16) constitué de particules solides du matériau chargé étant entassé contre la paroi interne du four à cuve et le matériau chargé parvenant de la face interne du remblai protecteur (16) dans la zone de la torche à plasma (14).

2. Procédé selon la revendication 1, caractérisé en ce que l'on introduit au début du processus métallurgique ou chimique une faible quantité du matériau chargé dans la zone de la contre-électrode (13) et, après allumage de la torche à plasma (14), on introduit à nouveau en continu le matériau chargé.

3. Procédé selon l'une des revendications 1 et 2, caractérisé en ce que le matériau chargé est introduit en continu par une couronne de tubes de chargement (12) entourant l'électrode (10).

4. Procédé selon l'une des revendications 1 et 2, caractérisé en ce que le matériau chargé est introduit en continu par une fente annulaire de chargement (17) entourant l'électrode (10).

5. Procédé selon une ou plusieurs des revendications 1 à 4, caractérisé en ce que l'on utilise un matériau chargé d'une grosseur de grains allant jusqu'à 25 mm.

6. Procédé selon une ou plusieurs des revendications 1 à 5, caractérisé en ce qu'on introduit des constituants en fines particules du matériau chargé par des canaux intérieurs de l'électrode (10).

7. Procédé selon une ou plusieurs des revendications 1 à 6, pour la préparation de ferro-alliages à partir de minerais d'oxydes et de matériau carboné, caractérisé en ce que l'on utilise comme matériau chargé un mélange des minerais correspondants, dans lesquels les éléments d'alliage et le fer sont présents essentiellement sous forme d'oxydes, et de charbon ou de coke.

8. Procédé selon une ou plusieurs des revendications 1 à 6 pour la préparation de carbure de calcium par réduction de CaO ou $CaCO_3$ par un matériau carboné avec libération de CO et fusion, caractérisé en ce que l'on utilise comme matériau chargé un lit de fusion constitué de CaO ou de $CaCO_3$ et de charbon ou de coke.

9. Bas fourneau pour la mise en œuvre du procédé selon l'une des revendications 7 et 8 ayant un corps de four à revêtement réfractaire et une conduite (20) disposée dans le corps du four pour le dispositif du chalumeau à plasma, un espace annulaire (24) pour l'amenée du matériau chargé ou du lit de fusion étant prévu entre la conduite (20) et le revêtement réfractaire (2), caractérisé en ce qu'un couvercle (19) peut être placé sur le corps du four en le fermant de manière étanche aux gaz et présente une colonne (20) en matériau réfractaire dépassant vers l'intérieur, en ce que la colonne présente un alésage central (21) pour le passage d'une électrode (10) et un refroidissement par l'eau (22) et une contre-électrode (13) est prévue dans le fond (3) du four à cuve, un espace tronconique (27) étant ménagé pour la formation de la torche à plasma (14) entre l'ouverture (23) de l'électrode ou du chalumeau à plasma (10), la contre-électrode (13) et la face interne du remblai protecteur (16) de constituants solides du matériau chargé.

10. Bas fourneau selon la revendication 9, caractérisé en ce que les parois de l'espace annulaire ou cuve (24) recevant le matériau chargé formées du revêtement réfractaire (2) et de la colonne (20) ont une forme divergente vers le fond (3).

11. Bas fourneau selon la revendication 9, caractérisé en ce que l'électrode (10) présente des canaux intérieurs pour l'amenée de constituants en fines particules du matériau chargé, en particulier de charbon.

0 118 655

FIG.1

FIG.2

FIG. 3

# FIG. 4